# FASCICULE DE BREVET EUROPEEN

(11) **EP 3 570 677 B1**
(45) Date de publication et mention de la délivrance du brevet: **11.12.2024**
(21) Numéro de dépôt: 18701696.9
(22) Date de dépôt: 18.01.2018
(51) Int. Cl.: A23C 20/00

(54) **PROCÉDÉ DE FABRICATION D'UN PRODUIT FROMAGER ET PRODUIT FROMAGER ALLÉGÉ EN MATIÈRES GRASSES**
VERFAHREN ZUR HERSTELLUNG EINES KÄSEPRODUKTS UND KÄSEPRODUKT MIT REDUZIERTEM FETTGEHALT
PROCESS FOR MANUFACTURING A CHEESE PRODUCT AND CHEESE PRODUCT WITH REDUCED FAT CONTENT

(30) Priorité: 18.01.2017 FR 1750364
(43) Date de publication de la demande: 27.11.2019
(73) Titulaire: BEL, 92150 Suresnes (FR)
(72) Inventeur: FAVRE, Jean, 72120 Rahay (FR); LEMOINE, Claude, 41100 Vendome (FR); LE DREFF, Christian, 41100 Roce (FR)
(74) Mandataire: Lavoix
(86) Numéro de dépôt international: PCT/EP2018/051183
(87) Numéro de publication internationale: WO 2018/134293

(56) Documents cités:
- US-A- 5 064 660
- US-A1- 2005 238 783

## Description

La présente invention concerne un procédé de fabrication d'un produit fromager dont la teneur en matière grasse est inférieure ou égale à 5 % en poids par rapport au poids total du produit fromager, ayant une humidité du produit fromager dégraissé de 60 à 75 % en poids total du produit fromager. La présente invention concerne également un produit fromager ayant une humidité du produit fromager dégraissé de 60 à 75 % en poids total du produit fromager et comprenant au moins une matière protéique en quantité suffisante pour que la teneur en protéines représente 10 à 35 %, ladite matière protéique comprenant au moins une matière protéique d'origine laitière, au plus 5% de matière grasse et de l'eau en complément à 100%, susceptible d'être obtenue par ce procédé.

De nombreux procédés industriels de fabrication de fromages allégés sont connus. Cependant des défauts de texture et d'aspect (translucide ou grisâtre pour les pâtes molles et pâtes pressées) sont directement causés par une faible teneur en matière grasse. Pour remédier à ces défauts il est essentiel d'ajouter des texturants tels que des hydrocolloïdes (carraghénanes, gommes de guar ou de caroube).

Une autre catégorie de procédés industriels permettant de fabriquer des fromages allégés en matière grasse est connue. Ces procédés font intervenir une étape de coagulation de lait écrémé ou demi-écrémé avec un coagulant ou présure (emprésurage) pour coaguler le lait, puis découpe du coagulum, séparation caillé/sérum et moulage. Ces procédés permettent d'obtenir des produits fromagers comprenant entre 10 et 15 % de matière grasse. Cependant, ces valeurs restent encore trop élevées pour revendiquer un véritable avantage nutritionnel par rapport aux référents du marché. Ces procédés ne permettent pas de baisser davantage le niveau de matière grasse sans détériorer les propriétés organoleptiques des fromages.

Des procédés pour la fabrication de fromages (spécialités fromagères) à partir de poudre de lait, de rétentats (concentrés de lait) obtenus par ultrafiltration sont également connus. Ces procédés sont rapides et permettent l'obtention de fromage en seulement quelques étapes : mélange de la poudre de lait avec de l'eau, des solutions d'acides et des graisses, ajout éventuel d'enzymes, chauffage du mélange ainsi obtenu, ajout d'additifs divers. Ces technologies telles que décrites dans WO 2006/030128 et EP2175739 utilisent la recombinaison pour la réalisation des fromages à partir de concentrés protéiques laitiers en poudre et de beurre, principalement. Ces procédés sont généralement utilisés pour fabriquer des fromages frais, fondus ou affinés.

Dans le cadre des nouvelles politiques nutritionnelles visant à réduire l'apport en lipides des consommateurs pour lutter contre l'obésité (et notamment l'obésité infantile) et dans le cadre de l'adoption de politiques alimentaires faisant la promotion d'aliments sains, la fabrication de produits fromagers à très faible teneur en matière grasse est hautement recherchée. Cependant fabriquer des produits fromagers à teneur très faible en matière grasse et ayant de bonnes qualités organoleptiques (texture, aspect, gout) sans additifs/texturants est extrêmement difficile.

Les produits fromagers de type pâte pressée allégée du commerce obtenus par des technologies traditionnelles, tels que les WeightWatchers^{®} slices (10 % de matière grasse), Les Croisés allégé (14 % de matière grasse) ou Leerdammer^{®} allégé (17 % de matière grasse) présentent des taux de matière grasse supérieurs ou égaux à 5 % en poids par rapport au poids total du produit fromager. En technologie d'ultrafiltration, il en va de même pour les produits fromagers allégés du commerce tels que Pavé d'Affinois léger (type pâte molle) contenant 9 % de matière grasse en poids par rapport au poids total du produit fromager.

Les produits fromagers obtenus par le procédé selon l'invention diffèrent également des produits fromagers obtenus par le procédé du brevet FR2911044*,* en ce que la répartition de la matière grasse, et plus précisément des globules gras, est plus homogène et plus stable, la blancheur est supérieure et donc l'aspect plus attractif pour le consommateur, les possibilités d'emballages sont beaucoup plus importantes, et la marge de manoeuvre est aussi plus importante en termes de texture et de goûts associés, qui ne sont pas limités par un procédé de restructuration.

Ainsi, le problème technique que vise à résoudre la présente invention consiste à obtenir des produits fromagers à teneur allégée en matière grasse (5 % au plus) ayant des caractéristiques rhéologiques et organoleptiques appréciables par les consommateurs.

### Procédé de fabrication d'un produit fromager à teneur très faible en matière grasse

L'invention concerne ainsi un procédé de fabrication d'un produit fromager dont la teneur en matière grasse est inférieure ou égale à 5 % en poids par rapport au poids total du produit fromager, et ledit produit fromager ayant une humidité du produit fromager dégraissé (HFD) de 60 à 75 %, ledit procédé comprenant les étapes suivantes :
a) dans un dispositif de mélange ou recombinaison, mélanger et chauffer à une température de 40 à 70°C pendant au moins 10 minutes, avec un cisaillement de 5 000 à 40 000 s⁻¹, avantageusement 15 000 à 25 000 s⁻¹ un mélange comprenant de l'eau, et au moins une matière protéique en quantité suffisante pour que la teneur en protéines représente 10 à 35 % en poids par rapport au poids total du mélange, ladite matière protéique comprenant au moins une matière protéique d'origine laitière, le mélange comprenant au plus 5 % de matière grasse en poids par rapport au poids total du mélange, de manière à obtenir un mélange homogène;
b) thermiser le mélange par chauffage, puis le refroidir ;
c) injecter dans le mélange au moins un agent coagulant ;
d) distribuer par dosage le mélange contenant l'agent coagulant dans des moules ;
e) coaguler entre 15 et 50°C ;
f) refroidir ; et
g) conditionner le produit fromager,
dans lequel ledit produit fromager est caractérisé en ce que le diamètre d'au moins 50% des globules gras dans le produit fromager est inférieur ou égal à 1,5 µm, de préférence inférieur à 1 µm, et en ce que le diamètre moyen des globules gras dans le produit fromager est inférieur ou égal à 1,5 µm, de préférence inférieur à 1 µm.

Par « produit fromager » on entend ici tout produit obtenu par voie de coagulation, fermenté ou non, affiné ou non, essentiellement obtenu à partir de matières d'origine laitière, pouvant inclure des matières premières d'origine végétale, par exemple de la matière grasse végétale, et de l'eau. Le produit fromager peut cependant contenir en faibles quantités, agent coagulant, auxiliaire(s) de fabrication, arôme(s), colorant(s), conservateur(s), mais est préférentiellement dépourvu de texturant. La teneur en matière sèche (l'extrait sec) des produits fromagers est typiquement de 25 à 60% en poids par rapport au poids total du produit fromager.

Selon un mode de réalisation, la coagulation est réalisée par voie enzymatique.

Selon un mode de réalisation particulier, le produit fromager est de type pâte pressée.

La norme FAO/OMS n°A6-1978 propose une classification des produits fromagers suivant leur humidité du produit fromager dégraissé (HFD). Les produits fromagers ayant une HFD comprise entre 54 et 63 % peuvent être appelés produits fromagers à pâte demi-dure, les produits fromagers ayant une HFD comprise entre 61 et 69 % peuvent être appelés produits fromagers à pâte demi-molle et les produits fromagers dont l'HFD est supérieure à 67 % peuvent être appelés produits fromagers à pâte molle.

Typiquement, l'HFD se calcule comme suit : (Poids de l'eau dans le fromage) x 100 / (Poids total du fromage - Poids de la matière grasse dans le fromage)
Dans le cadre de la présente invention, on entend par produit fromager de type pâte pressée un produit fromager dont l'HFD est comprise entre 60 et 65 %, ce qui correspond donc à un produit fromager à pâte demi-molle selon la norme FAO/OMS n°A6-1978. Le produit fromager de type pâte pressée selon l'invention a typiquement un extrait sec entre 45 et 60 % en poids par rapport au poids total du produit fromager.

### Composition du mélange

Le procédé selon l'invention comprend l'introduction dans un dispositif de mélange ou recombinaison d'un mélange comprenant de l'eau, et au moins une matière protéique, ladite matière protéique comprenant au moins une matière protéique d'origine laitière, le mélange comprenant au plus 5 % de matière grasse en poids par rapport au poids total du mélange. Ce mélange peut en outre comprendre du sel (NaCl).

La matière protéique peut être sélectionnée, de manière non limitative, dans le groupe constitué des matières protéiques d'origine laitière, les matières protéiques d'origine végétale, et d'un mélange de ces matières protéiques.

La matière protéique d'origine laitière peut être sélectionnée, de manière non limitative, dans le groupe constitué de poudres de lait entier, poudres de lait écrémé, de caséines, de caséinates, de concentrés protéiques laitiers, de concentrés de protéines sériques, de fromages frais ou affinés, de caillés, de yaourts, de laits fermentés, et d'un mélange de ces matières protéiques d'origine laitière.

L'ensemble de ces matières premières est bien connu de l'homme de métier et est largement disponible sur le marché mondial. On peut citer les produits commercialisés par Fonterra, Aria Foods. Leur technologie de fabrication est également décrite dans Vignola C. : Science et Technologie du lait Ed Polytechnique de Montréal 2002*.*

Dans un mode de réalisation préféré, la matière protéique d'origine laitière est exclusivement sous forme de poudre.

De manière très avantageuse, la matière protéique d'origine laitière est appauvrie en lactose (une concentration limitante en lactose permettant de stopper l'acidification fermentaire) pour donner de meilleures propriétés organoleptiques au produit. En particulier, la matière protéique d'origine laitière selon l'invention a une teneur en lactose inférieure à 15 %, avantageusement inférieure à 12 % et de préférence inférieure à 6 % en poids par rapport au poids total du mélange de l'étape a).

Le lactose est un glucide naturellement présent dans le lait (de 20 à 80 g/L).C'est un diholoside (ou disaccharide), composé d'une molécule de β-D-galactose (Gal) et d'une molécule de α/β-D-glucose (Glc) reliées entre elles par une liaison osidique β(1→4). Le lactose est également appelé le β-D-galactopyranosyl(1→4)D-glucopyranose. Il peut être symbolisé par Gal β(1→4) Glc.

La matière protéique d'origine végétale peut être sélectionnée, de manière non limitative, dans le groupe constitué de protéines issues des céréales, des oléagineux, des légumineuses et des tubercules, ainsi que toutes les protéines issues des algues et des microalgues, utilisées seules ou en mélange, et d'un mélange de ces protéines d'origine végétale.

Par « algues » et « microalgues », on entend dans la présente demande des organismes eucaryotes dépourvus de racine, de tige et de feuille, mais possédant de la chlorophylle ainsi que d'autres pigments accessoires à la photosynthèse productrice d'oxygène. Elles sont bleues, rouges, jaunes, dorées et brunes ou encore vertes.

Les microalgues au sens strict sont des algues microscopiques. Unicellulaires ou pluricellulaires indifférenciées, ce sont des micro-organismes photosynthétiques séparés en deux groupes polyphylétiques : les eucaryotes et les procaryotes. Vivant dans les milieux fortement aqueux, elles peuvent posséder une mobilité flagellaire.

Par « céréales », on entend dans la présente demande des plantes cultivées de la famille des graminées produisant des grains comestibles, comme par exemple le blé, l'avoine, le seigle, l'orge, le maïs, le sorgho, le riz. Les céréales sont souvent moulues sous forme de farine, mais se présentent aussi sous forme de grains et parfois sous forme de plante entière (fourrages).

Par « tubercules », on entend dans la présente demande tous les organes de réserve, généralement souterrains, qui assurent la survie des plantes pendant la saison d'hiver et souvent leur multiplication par voie végétative. Ces organes sont renflés par l'accumulation de substances de réserve. Les organes transformés en tubercules peuvent être :
la racine : carotte, panais, manioc, konjac,
le rhizome : pomme de terre, topinambour, crosne du Japon, patate douce, la base de la tige (plus précisément l'hypocotyle) : chou-rave, céleri-rave,
l'ensemble racine et hypocotyle : betterave, radis.

Par « oléagineux », on désigne dans la présente demande les plantes cultivées spécifiquement pour leurs graines ou leurs fruits riches en matières grasses, dont on extrait de l'huile à usage alimentaire, énergétique ou industriel, comme par exemple le soja, colza, l'arachide, le tournesol, le sésame, le ricin.

Par « légumineuses », on entend, au sens de la présente invention, toutes plantes appartenant aux familles des césalpiniacées, des mimosacées ou des papilionacées et notamment toutes plantes appartenant à la famille des papilionacées comme, par exemple, le pois, le haricot, la fève, la fèverole, la lentille, la luzerne, le trèfle ou le lupin. Cette définition inclut notamment toutes les plantes décrites dans l'un quelconque des tableaux contenus dans l'article de R. HOOVER et al., 1991 (HOOVER R. (1991 ) « Composition, structure, functionality and chemical modification of légume starches : a review » Can. J. Physiol. Pharmacol., 69 pp. 79-92).

Les protéines issues de légumineuses sont par exemple choisies dans le groupe consistant en les protéines du pois, de la luzerne, du trèfle, du lupin, du haricot, de la fève, de la fèverole, de la lentille.

Selon un mode de réalisation, la matière protéique d'origine végétale est sélectionnée dans le groupe constitué de protéines de pois, protéines de soja, protéines de riz, de blé, et d'un mélange de ces matières protéiques d'origine végétale.

Dans un mode de réalisation, le mélange de l'étape a) comprend de la matière protéique comprenant au moins une matière protéique d'origine laitière et au moins une matière protéique d'origine végétale en quantité suffisante pour que la teneur en protéines dans le mélange représente 10 à 35 %, préférentiellement 15 à 30 %.

Dans un mode préféré de réalisation, le mélange de l'étape a) comprend de la matière protéique d'origine laitière en quantité suffisante pour que la teneur en protéines dans le mélange représente 10 à 35 %, préférentiellement 15 à 30 %.

De même le mélange de l'étape a) du procédé selon l'invention comprend au plus de 1 à 20 % de lactose et de manière préférée de 1 à 10 % de lactose, avantageusement de 1 à 5 % de lactose en poids par rapport au poids total du mélange.

Le mélange de l'étape a) comprend au plus 5 % de matière grasse, en poids par rapport au poids total du mélange, par exemple de 0,15 à 5 %, de 0,15 à 4 %, ou encore de 0,15 à 3 %, plus particulièrement de 0,15 à 2 %, voire de 0,15 à 1 % de matière grasse, en poids par rapport au poids total du mélange.

Généralement, au moins une partie de la matière grasse est apportée par la matière protéique d'origine laitière. En effet, les matières protéiques d'origine laitière même écrémées contiennent généralement une teneur résiduelle en matière grasse d'environ 0,15 % en poids par rapport au poids de la matière protéique d'origine laitière.

L'étape a) peut comprendre l'ajout de matière grasse en une teneur de 0,1 à moins de 5,0 %, en poids par rapport au poids total du mélange, la teneur totale du mélange en matière grasse étant de 5 % au plus. La quantité de matière grasse ajoutée dans le mélange est adaptée en fonction de la teneur en matières grasse de la matière protéique d'origine laitière, de sorte que le poids total en matière grasse dans le mélange de recombinaison soit de 0,15 à 5 % du poids total du mélange, et notamment de 0,15 à 4 %, ou encore de 0,15 à 3 %, plus particulièrement de 0,15 à 2 %, voire de 0,15 à 1 %.

Le procédé selon l'invention permet ainsi d'obtenir des produits fromagers dont le taux de matières grasses en poids par rapport au poids total du produit fromager est au plus de 5 %, et notamment de 0,15 à 5 %, ou encore de 0,15 à 4 %, ou encore 0,15 à 3 %, plus particulièrement de 0,15 à 2 %, voire de 0,15 à 1 %.

La matière grasse ajoutée est d'origine animale, d'origine végétale ou est un mélange de matières grasses d'origine animale et végétale, de manière préférée la matière grasse est d'origine animale. Comme matières grasses animales, on peut citer la matière grasse laitière, la matière grasse laitière anhydre, le beurre, la crème. Comme matières grasses végétales, on peut citer l'huile de soja, de tournesol, de palme, palmiste, de coprah, d'arachide, de colza et toute huile végétale utilisée dans la fabrication de produits alimentaires et disponible sur le marché.

Le mélange peut comprendre en outre au moins un auxiliaire de fabrication.

Les auxiliaires de fabrication sont des auxiliaires autres que l'agent coagulant et incluent en particulier le sel (typiquement : sel de table, sel de mer, saumure, substitut de NaCl), permettant d'adapter la sapidité du produit fromager, et les ferments fromagers d'affinage (agents de fermentation mésophiles et/ou thermophiles, en particulier bactéries du genre *Lactobacillus* ou *Streptococcus*)*.* Les auxiliaires de fabrication ne sont pas des additifs et n'incluent donc pas sels de fonte, et texturants dont émulsifiants.

La teneur en sel dans le mélange est généralement de 1,3 à 1,7 % en poids par rapport au poids total du mélange.

L'eau est présente dans le mélange en quantité suffisante jusqu'à 100 % en poids. Généralement, la teneur en eau dans le mélange est de 60 à 75%, 60 à 70%, ou encore de 60-65%, en poids, par rapport au poids total du mélange. Pour constituer le mélange, lorsque le mélange contient de la matière grasse ajoutée, il est possible d'ajouter dans le dispositif de mélange ou recombinaison l'eau, puis ladite au moins une matière protéique d'origine laitière, et enfin la matière grasse ajoutée. Alternativement, il est possible d'ajouter dans le dispositif de mélange ou recombinaison l'eau, puis la matière grasse ajoutée, et enfin ladite au moins une matière protéique d'origine laitière. Les deux modes d'incorporation ci-dessus décrits permettent d'assurer une bonne émulsion du mélange.

Selon un mode de réalisation, le mélange de l'étape a) ne contient pas d'autres ingrédients que ladite au moins une matière protéique d'origine laitière, de l'eau et éventuellement ladite au moins une matière grasse ajoutée et/ou au moins un auxiliaire de fabrication.

### Mélange ou recombinaison

Le dispositif de mélange ou recombinaison est typiquement un appareil de type cutter (par exemple ceux commercialisés sous la dénomination STEPHAN^{®}) ou des appareils de type pétrin, mélangeur, malaxeur, cuiseur-mélangeur, co-malaxeur, extrudeur. Il est précisé que des cisaillements de 5000 à 40 000 s⁻¹ et à une vitesse d'agitation de l'ordre de 1500 tours/minute correspondent typiquement au cisaillement des appareils de recombinaison connus.

La durée de mélange ou recombinaison est d'au moins 10, 15, 20, 25 ou 30 minutes. La durée de mélange ou recombinaison est aussi typiquement d'au plus 2h, 1h30, ou encore 1h.

La durée et l'intensité de cisaillement lors du mélange ou de la recombinaison sont choisis de manière à permettre l'obtention de globules gras de petite taille, dont le diamètre d'au moins 50 % des globules est inférieur ou égal à 1,5 µm, de préférence inférieur à 1 µm, et dont le diamètre moyen des globules gras dans le produit fromager est inférieur ou égal à 1,5 µm, de préférence inférieur à 1 µm.

Les diamètre et diamètre moyen des globules gras dans le mélange sont mesurés par analyse granulométrique.

La durée et l'intensité de cisaillement choisis lors du mélange ou de la recombinaison permettent ainsi d'obtenir un produit fromager caractérisé en ce que le diamètre d'au moins 50 % des globules gras dans le produit fromager est inférieur ou égal à 1,5 µm, de préférence inférieur à 1 µm, et en ce que le diamètre moyen des globules gras dans le produit fromager est inférieur ou égal à 1,5 µm, de préférence inférieur à 1 µm.

Les diamètre et diamètre moyen des globules gras dans le produit fromager sont mesurés en microscopie confocale à balayage laser (MCBL).

Par globule gras on entend ici une structure de forme arrondie ou ovalaire, composée uniquement de matière grasse, animale ou végétale.

En comparaison, les produits fromagers obtenus par technologie traditionnelle comprennent des globules gras dont le diamètre moyen est supérieur à 3 µm et de la matière grasse coalescée. La majorité de la matière grasse n'est plus donc plus sous forme de globules gras, ceux-ci ayant tendance à subir un phénomène de coalescence.

Dans le cadre de l'invention, la stabilité de ces globules gras est obtenue grâce à la présence de matière protéique en quantité importante, qui forme une interface à la surface des globules gras et engendre la formation d'un réseau homogène au sein du mélange puis du produit fromager grâce à un pontage calcique. La matière grasse n'est ainsi pas relarguée, et le produit fromager obtenu est stable dans le temps. Il a été démontré que, après un affinage de 6 mois, la granulométrie des globules gras des produits testés était demeurée inchangée. La petite taille des globules gras donne au mélange et au produit fromager une couleur blanche, et non grisâtre ce qui constitue une caractéristique non désirée de nombreux produits fromagers allégés en matière grasse.

Du fait de la formation d'un réseau homogène au sein du mélange puis du produit fromager, le produit fromager présente une texture plus agréable (plus souple) que les produits fromagers du commerce allégés en matière grasse dont la texture est souvent caoutchouteuse ou cassante.

Les diamètres des globules gras peuvent être mesurés par des techniques classiques de granulométrie. Les techniques de mesure de granulométrie sont connues de l'homme du métier, et incluent par exemple la granulométrie laser (lorsque le produit à analyser est apte à s'écouler) ou l'analyse de particules par microscopie confocale à balayage laser (lorsque le produit à analyser est solide).

Le granulomètre laser permet de mesurer les tailles d'objets de petites dimensions (0,1 µm à 2 mm). Son domaine d'application est très large et convient à l'analyse de particules en voie humide (suspension/émulsion dans un solvant) et l'analyse de particules en voie sèche (poudre).

La microscopie confocale à balayage laser permet, par fixation de marqueurs fluorescents spécifiques (fluorochromes), de visualiser des composés d'intérêt dans l'échantillon tels que les protéines ou la matière grasse. Cette technique utilise le laser, une source lumineuse unidirectionnelle, qui, à une longueur d'onde donnée, va venir pénétrer le produit dans la masse et recueillir des informations structurales sur une zone d'un plan de l'échantillon, appelé plan focal. La présence d'un diaphragme permet de bloquer l'émission de fluorescence provenant des autres plans de l'échantillon.

Le mélange ou recombinaison est effectué à une température de 40 à 70°C, de préférence encore de 60 à 70°C et de manière plus préférée de 65 à 70°C, pendant au moins 10 minutes, 20 minutes, 30 minutes, 40 minutes, 50 minutes ou 60 minutes, préférentiellement pendant au moins 20 minutes.

La température du mélange dans le dispositif de mélange ou recombinaison reste de préférence inférieure ou égale à 70°C, température de dénaturation des protéines sériques au-delà de laquelle la viscosité du mélange deviendrait trop importante.

### Thermisation et refroidissement

La thermisation est réalisée par chauffage à une température d'au moins 65°C, de préférence de 70 à 80°C, avantageusement de 72 à 95°C, de préférence encore à 75°C, pendant au moins 10 secondes, de préférence pendant 10 à 60 secondes, par exemple pendant 50 secondes.

La thermisation du mélange est suivie d'un refroidissement du mélange à une température appropriée pour le développement des ferments lactiques des produits fromagers, jusqu'à la température de l'étuve dans laquelle la coagulation va être démarrée. Avantageusement, le mélange est refroidi à une température de 15 à 50°C, préférentiellement 20 à 43°C.

### Injection

Au moins un coagulant est ensuite injecté dans le mélange thermisé puis refroidi.

Par agent coagulant, on entend une enzyme protéolytique permettant la coagulation des protéines, particulièrement les protéines laitières et la formation d'un caillé. A titre d'exemple, la présure peut être utilisée. Typiquement, 1 à 50 g de coagulant d'une force de 750 International Milk Clotting Units (IMCU) sont utilisés pour 100 kg de mélange. Avantageusement, l'étape d'injection d'au moins un agent coagulant comprend en outre l'injection d'un ou plusieurs auxiliaires de fabrication. Les auxiliaires de fabrication sont des auxiliaires autres que l'agent coagulant et incluent en particulier le sel (typiquement : sel de table, sel de mer, saumure, substitut de NaCl, permettant d'adapter la sapidité au produit) et les ferments fromagers d'affinage (agents de fermentation mésophiles et/ou thermophiles, en particulier bactéries du genre *Lactobacillus* ou *Streptococcus*)*.* Les auxiliaires de fabrication ne sont pas des additifs et n'incluent donc pas sels de fonte, et texturants dont émulsifiants. Les auxiliaires de fabrication sont préférentiellement injectés dans le mélange thermisé puis refroidi avant l'injection de l'agent coagulant.

Eventuellement, du sel est ajouté au mélange en quantité suffisante pour que la teneur dans le mélange représente 1,3 à 1,7 % en poids par rapport au poids total du mélange. L'injection de sel est mise en oeuvre en particulier lorsque le mélange de l'étape a) n'a pas incorporé de sel ou lorsque le procédé ne comprend pas d'étape de saumurage.

Selon un mode de réalisation, l'étape d'injection d'au moins un agent coagulant, et avantageusement d'un ou plusieurs auxiliaires de fabrication, comprend en outre l'injection d'un ou plusieurs additifs.

Par « additif » on entend ici toute substance qui n'est pas normalement consommée en tant que denrée alimentaire en soi et n'est pas normalement utilisée comme ingrédient caractéristique d'une denrée alimentaire, qu'elle ait ou non une valeur nutritive, et dont l'addition intentionnelle à la denrée alimentaire dans un but technologique ou organoleptique, à une quelconque étape de la fabrication, de la transformation, de la préparation, du traitement, du conditionnement, de l'emballage, du transport ou du stockage de ladite denrée, entraîne ou peut entraîner (directement ou indirectement) son incorporation ou celle de ses dérivés dans la denrée ou peut affecter d'une autre façon les caractéristiques de ladite denrée (définition selon la norme Codex Stan 192-1995 du Codex Alimentarius). On peut citer par exemple les sels de fonte, les texturants (émulsifiants, épaississants), les conservateurs, les exhausteurs, les acidifiants, les anti-oxydants, et les colorants. L'expression ne s'applique ni aux contaminants, ni aux substances ajoutées aux denrées alimentaires dans le but d'en maintenir ou améliorer les propriétés nutritives, ou au chlorure de sodium et ferments.

Le règlement UE n°1129/2011 du 11 novembre 2011 contient dans la partie B de l'annexe II une liste exhaustive des additifs autorisés dans l'Union Européenne, dont les colorants, conservateurs et texturants.

On entend ici par « arômes » les arômes, substances aromatisantes, préparations aromatisantes, arômes obtenus par traitement thermique, arômes de fumée et précurseurs d'arômes tels que définis dans le Règlement (CE) n° 1334/2008 du 16 décembre 2008, qui contient dans l'annexe I une liste exhaustive des arômes autorisés dans l'Union Européenne.

Dans un mode de réalisation de l'invention, le procédé ne comprend l'utilisation d'aucun additif choisi parmi sels de fonte et texturants (émulsifiants et épaississants).

Dans un mode de réalisation, le procédé comprend l'injection de colorant(s), arôme(s) et/ou conservateur(s). Préférentiellement, selon ce mode de réalisation, le procédé ne comprend l'utilisation d'aucun additif choisi parmi sels de fonte et texturants (émulsifiants et épaississants).

Afin d'optimiser la valeur nutritionnelle du produit fromager, un mode de réalisation du procédé selon l'invention comprend l'ajout, dans le mélange thermisé puis refroidi, de micronutriments, d'antioxydants, de microalgues (telles que par exemple des chlorelles et des spirulines), de vitamines (telles que par exemple la vitamine A, B, C et/ou D), de minéraux (tels que par exemple du : calcium, potassium, magnésium, zinc, fer, iode, cuivre, sélénium, manganèse etc ... ), sous formes solubles ou insolubles. Préférentiellement, selon ce mode de réalisation, le procédé ne comprend l'utilisation d'aucun additif choisi parmi sels de fonte et texturants (émulsifiants et épaississants).

Selon un mode de réalisation de l'invention le goût et/ou l'apparence du produit fromager peuvent être modulés par ajout d'arôme(s) spécifique(s) à dominante sucrée (fruits, sucre, vanille, etc...) ou salée (arôme fromage), par ajout d'épice(s), d'aromate(s), de colorant(s) naturel(s), ou d'élément(s) figuré(s) (grain de poivre, de cumin, brisures de noix, d'amandes, etc...), et leur combinaison. Préférentiellement, selon ce mode de réalisation, le procédé ne comprend l'utilisation d'aucun additif choisi parmi sels de fonte et texturants (émulsifiants et épaississants).

Par "éléments figurés", on entend des éléments qui présentent une forme, une texture, une couleur, ou un goût reconnaissable au sein du produit fromager. On citera, à titre d'exemples d'éléments figurés, l'ail, le persil, le poivre, l'échalote, le cumin, les éclats de noix, les noisettes, les olives, les herbes, les copeaux de légumes ou de fruits.

### Dosage / coagulation

Le mélange injecté avec l'agent coagulant et comprenant éventuellement en outre un ou des colorants, arômes et/ou conservateurs, un ou des auxiliaires de fabrication, un ou des additifs et un ou des micronutriments, antioxydants, microalgues, vitamines, minéraux, arôme(s), épice(s), aromate(s), colorant(s) naturel(s), ou élément(s) figuré(s), est ensuite injecté dans des moules.

Selon un mode de réalisation, les moules permettent la formation de mini-portions de 20 à 30g de produit fromager.

Le mélange injecté dans les moules est ensuite laissé à coaguler à une température de 15 à 50°C, préférentiellement 20 à 43°C. Le mélange injecté dans les moules est généralement laissé en étuve pendant une durée comprise entre 10 min et 7h.

Selon un mode de réalisation, le procédé comprend après l'étape e) de coagulation et avant l'étape f) de refroidissement, une étape de saumurage de manière à ce que la teneur en sel dans le produit fromager représente 1,3 à 1,7 % en poids par rapport au poids total du produit fromager.

Avantageusement, le procédé comprend une étape d'affinage du produit fromager, après l'étape e) de coagulation et éventuellement après l'étape de saumurage si elle est mise en oeuvre, mais avant l'étape f) de refroidissement. Par affinage, on entend la phase comprenant la séquence coagulation acidification en présence, a minima, de ferments lactiques. Les produits fromagers sont alors avantageusement affinés pendant une durée de l'ordre de 1 à 10 jours, de préférence de 1 à 2 jours, à une température de 25 à 35°C, jusqu'à un pH des spécialités fromagères typiquement de 4,7 à 5,3 (notamment 5,2 pour les pâtes pressées).

Une large gamme de ferments d'affinage peut être utilisée ; on citera les ferments *Lactobacillus*, et/ou *Streptococcus* et tout ferment connu de l'homme du métier à l'origine de la formation des composés aromatiques caractéristiques des produits fromagers traditionnels. Selon des réalisations préférées les ferments d'affinage sont introduits en même temps que l'agent coagulant, c'est-à-dire à l'étape c), mais ils peuvent également être introduits par exemple après la coagulation dans le cas de ferments participant à la croûte fromagère.

### Refroidissement / conditionnement

Le produit fromager est ensuite conditionné, de préférence sous forme de portion paraffinée. A cet effet, le produit fromager est préalablement refroidi à une température inférieure à la température de coagulation et comprise entre 4 et 20°C.

En variante, le produit fromager est conditionné sous une autre forme de conditionnement, telle que pot, barquette, sachet souple, portion aluminium, dosette, etc. Optionnellement, le produit fromager est préalablement découpé en tranches.

### Caractéristiques du produit fromager

Le produit fromager obtenu par le procédé a une teneur en matière grasse inférieure ou égale à 5 % en poids par rapport au poids total du produit fromager, une humidité du produit fromager dégraissé (HFD) comprise entre 60 et 75 %, et comprend, en poids par rapport au poids total du produit fromager :
- 10 à 35%, préférentiellement 15 à 30% de protéines ;
- au plus 5 %, préférentiellement 0,15% à 5%, plus préférentiellement 0,15% à 3 %, plus préférentiellement encore 0,15 à 2%, encore plus préférentiellement 0,15 à 1,8%, voire 0,15 à 1,5%, voire 0,15 à 1% de matière grasse ; et
- eau en complément à 100%.

Selon un mode de réalisation de l'invention le produit fromager a une teneur en glucides inférieure ou égale à 5 % en poids par rapport au poids total du produit fromager, de préférence inférieure ou égale à 1 %, avantageusement inférieure ou égale à 0,1 % après acidification lactique.

Le produit fromager obtenu peut comprendre en outre un ou des auxiliaires de fabrication (en particulier au moins du sel), un ou des additifs dont des antioxydants, un ou des micronutriments, microalgues, minéraux, arômes, au moins un acide, par exemple l'acide lactique, et/ou éléments figurés. Préférentiellement, le produit fromager ne comprend aucun additif choisi parmi sels de fonte et texturants (émulsifiants et épaississants). Selon ce mode de réalisation, le pourcentage pondéral représenté cumulativement par les sels de fonte et texturants est inférieur à 0,1 %.

Le produit fromager obtenu par le procédé selon l'invention est caractérisé en ce que le diamètre d'au moins 50 % des globules gras dans le produit fromager est inférieur ou égal à 1,5 µm, de préférence inférieur à 1 µm, et en ce que le diamètre moyen des globules gras dans le produit fromager est inférieur ou égal à 1,5 µm, de préférence inférieur à 1 µm.

Les diamètre et diamètre moyen des globules gras dans le produit fromager sont mesurés en microscopie confocale à balayage laser (MCBL).

Les diamètre et diamètre moyen des globules gras dans le produit fromager sont typiquement obtenus en réalisant un mélange à l'étape a) caractérisé en ce que le diamètre d'au moins 50 % des globules gras dans le mélange est inférieur ou égal à 1,5 µm, de préférence inférieur à 1 µm, et en ce que le diamètre moyen des globules gras dans le produit fromager est inférieur ou égal à 1,5 µm, de préférence inférieur à 1 µm.

Les diamètre et diamètre moyen des globules gras dans le mélange sont mesurés par analyse granulométrique.

D'une manière générale, le produit fromager obtenu par le procédé selon l'invention présente les caractéristiques d'un produit fromager tel que décrit ci-après.

### Produit fromager

L'invention concerne aussi un produit fromager susceptible d'être obtenu par le procédé décrit au-dessus, ayant une humidité du produit fromager dégraissé (HFD) comprise entre 60 et 75 %, et comprenant, en poids par rapport au poids total du produit fromager :
- 10 à 35 %, préférentiellement 15 à 30 % de protéines ;
- au plus 5 %, préférentiellement 0,15 % à 5 %, plus préférentiellement 0,15 % à 3 %, plus préférentiellement encore 0,15 à 2 %, encore plus préférentiellement 0,15 à 1,8%, voire 0,15 à 1,5%, voire 0,15 à 1 % de matière grasse ; et
- eau en complément à 100 %.

Dans un mode de réalisation de l'invention, le produit fromager ne comprend aucun additif choisi parmi sels de fonte et texturants (émulsifiants et épaississants). Le pourcentage pondéral représenté cumulativement par les sels de fonte et texturants est alors inférieur à 0,1 %.

Dans un mode de réalisation, le produit comprend colorant(s), arôme(s) (notamment des arômes spécifiques à dominante sucrée (fruits, sucre, vanille, etc...) ou salée (arôme fromage), des épices, des aromates) et/ou conservateur(s). Préférentiellement, selon ce mode de réalisation, le produit fromager ne comprend aucun additif choisi parmi sels de fonte et texturants (émulsifiants et épaississants).

Le produit fromager obtenu peut comprendre en outre un ou des auxiliaires de fabrication (en particulier au moins du sel), un ou des additifs dont des antioxydants, un ou des micronutriments, microalgues (telles que par exemple des chlorelles et des spirulines), vitamine(s) (telles que par exemple la vitamine A, B, C et/ou D), minéraux (tels que par exemple du : calcium, potassium, magnésium, zinc, fer, iode, cuivre, sélénium, manganèse, etc...), au moins un acide, par exemple l'acide lactique, et/ou éléments figurés (par exemple l'ail, le persil, le poivre, l'échalote, le cumin, les éclats de noix ou d'amandes, les noisettes, les olives, les herbes, les copeaux de légumes ou de fruits).

Ce produit fromager susceptible d'être obtenu par le procédé de fabrication selon l'invention. Selon un mode de réalisation particulier, ledit produit fromager pourra être de type pâte pressée, tel que défini précédemment.

Le diamètre d'au moins 50 % des globules gras dans le produit fromager est inférieur ou égal à 1,5 µm, de préférence inférieur à 1 µm, et en ce que le diamètre moyen des globules gras dans le produit fromager est inférieur ou égal à 1,5 µm, de préférence inférieur à 1 µm. Les diamètre et diamètre moyen des globules gras dans le produit fromager sont mesurés en microscopie confocale à balayage laser (MCBL).

Selon un mode particulier de l'invention, le produit fromager a un extrait sec de de 25 à 60 % en poids par rapport au poids total du produit fromager, préférentiellement de 45 à 60 % en poids par rapport au poids total du produit fromager.

Dans un mode particulier le produit fromager produit par le procédé selon l'invention répond à la définition des produits dits « healthy snacks » (HS) selon la FDA (Food and Drug Administration), rappelée dans le tableau ci-après.

**Tableau 1 : Standards « healthy snack » de la FDA**

| Composé | | "Healthy standard" selon la FDA pour 100 g |
|---|---|---|
| Matières grasses | | ≤6 g |
| | Dont saturées | ≤2 g |
| | Cholestérol | ≤400 mg |
| Sodium | | ≤960 mg |
| Calcium | | ≤ 333 mg |
| Protéines | | ≥ 17g |

Selon un mode de réalisation de l'invention le produit fromager a une teneur en glucides inférieure ou égale à 5 % en poids par rapport au poids total du produit fromager, de préférence inférieure ou égale à 1 %, avantageusement inférieure ou égale à 0,1 % après acidification lactique.

On entend par « glucides » tous composés organiques contenant un groupe carbonyle (aldéhyde ou cétone) et au moins deux groupes hydroxyle (-OH). On inclut dans cette classe les substances issues des monosaccharides par réduction du groupe carbonyle, par oxydation d'au moins un groupe fonctionnel à l'extrémité de la chaîne en acide carboxylique ou par remplacement d'un ou plusieurs groupes hydroxyle par un atome d'hydrogène, un groupe amino, un groupe thiol ou par tout atome similaire. En particulier le terme glucide comprend les monosaccharides tels que le glucose, le galactose ou le fructose et les disaccharides tels que tels le saccharose, le lactose ou le maltose, les polymères d'oses (oligosaccharides et polysaccharides).

Selon un mode de réalisation de l'invention le produit fromager a une teneur en lactose inférieure à 1 % en poids par rapport au poids total du produit fromager, de préférence inférieure ou égale à 0,5 %, avantageusement inférieure ou égale à 0,1 %.

Selon un mode de réalisation préféré de l'invention le produit fromager comprend 0,15 à 0,5 % de matière grasse et 0 % de glucides en poids par rapport au poids total du produit fromager. Un tel produit peut être appelé dans certains cas « double 0 ». A ce stade et selon nos connaissances, aucun fromage ou spécialité fromagère commercialisé ne peut satisfaire à l'allégation « 0 % de matière grasse et de glucides ».

Le produit « double 0 » est obtenu à partir de matière première écrémée et sans matière grasse ajoutée. Les glucides naturellement présents dans les matières premières laitières (lactose principalement) sont entièrement consommés par les ferments lactiques dans ces formulations.

Les formulations « double 0 » comprennent :
- un concentré protéique laitier de type MPC (Milk Protein Concentrate) dont la teneur en protéines est supérieure à 60 % avec une teneur réduite en glucides inférieure à 10 % en poids par rapport au poids total du mélange.
- La consommation du lactose présent dans la formulation est réalisée par l'action de ferments lactiques (les ferments lactiques utilisés sont choisis parmi le groupe consistant en des agents de fermentation mésophiles et/ou thermophiles, en particulier des bactéries du genre *Lactobacillus* ou *Streptococcus)* spécifiquement choisis pour l'apport aromatique. Il en résulte un produit sapide et sans sucre résiduel.

Le pH du produit fromager de l'invention est avantageusement compris entre 5,0 et 5,6.

Selon un mode de réalisation, le produit fromager se présente sous la forme de portion de 20 à 30 g.

Tout au long de la présente demande, le terme « comprenant » doit être interprété comme englobant toutes les caractéristiques spécifiquement mentionnées, ainsi que des caractéristiques optionnelles, additionnelles, ou non décrites expressément. Le terme «comprenant» divulgue également le mode de réalisation dans lequel aucune caractéristique autre que les caractéristiques mentionnées spécifiquement sont présentes (c'est-à-dire, « comprenant » à le sens de « consistant en »).

L'invention est également illustrée par les figures et exemples suivants qui n'en limitent pas la portée.

### FIGURES

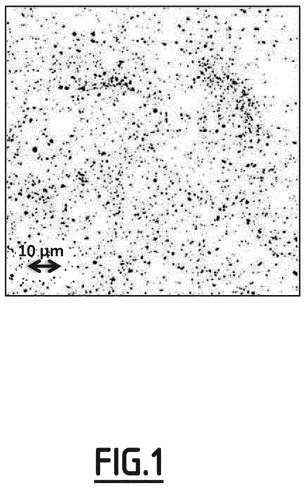

Figure 1 : Observations au microscope confocal à balayage laser (grossissement x63) d'un produit fromager sans ajout de matière grasse, comprenant 0,5 % de matière grasse en poids par rapport au poids total du produit fromager. Les globules gras sont colorés, ils apparaissent ici en noir.

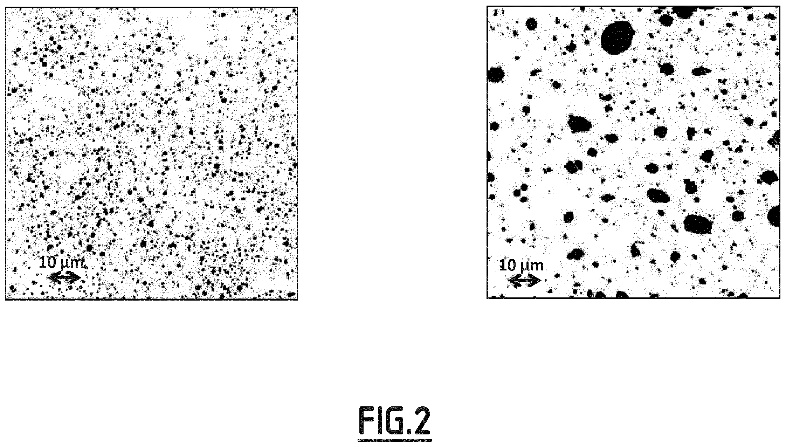

Figure 2 : Observations au microscope confocal à balayage laser (grossissement x63) d'un produit fromager comprenant 4 % de matière grasse animale en poids par rapport au poids total du produit fromager (gauche) en comparaison avec un produit du marché de type pâte molle comprenant 5 % de matière grasse en poids par rapport au poids total du produit fromager (droite).

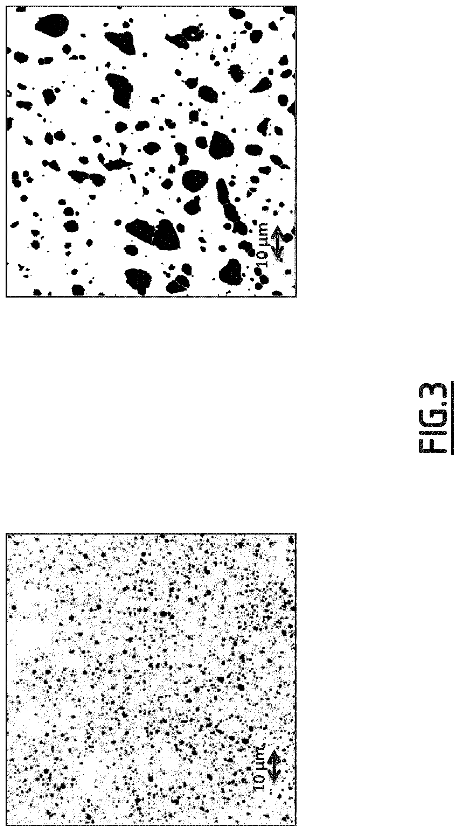

Figure 3 : Observations au microscope confocal à balayage laser (grossissement x63) d'un produit fromager comprenant 4 % de matière grasse animale en poids par rapport au poids total du produit fromager (gauche) en comparaison avec un produit du marché de type pâte pressée comprenant 10,3 % de matière grasse en poids par rapport au poids total du produit fromager (droite).

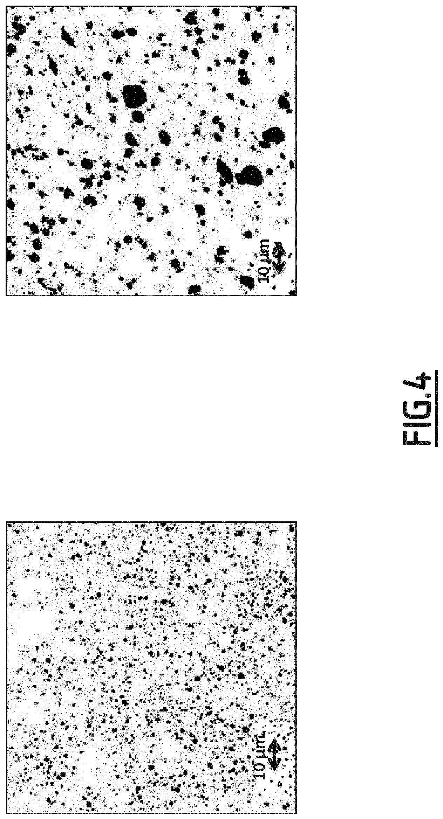

Figure 4 : Observations au microscope confocal à balayage laser (grossissement x63) d'un produit fromager comprenant 4 % de matière grasse animale en poids par rapport au poids total du produit fromager (gauche) en comparaison avec un produit du marché de type pâte molle comprenant 9 % de matière grasse en poids par rapport au poids total du produit fromager (droite).

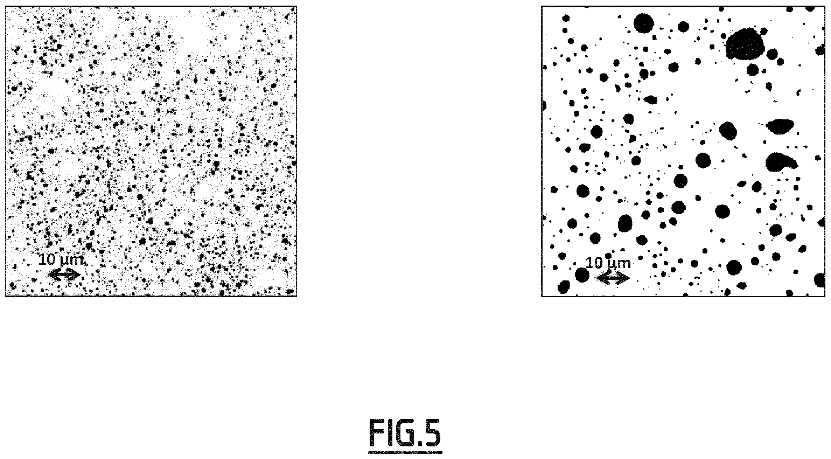

Figure 5 : Observations au microscope confocal à balayage laser (grossissement x63) d'un produit fromager comprenant 4 % de matière grasse animale en poids par rapport au poids total du produit fromager (gauche) en comparaison avec un produit du marché de type pâte pressée comprenant 17 % de matière grasse en poids par rapport au poids total du produit fromager (droite).

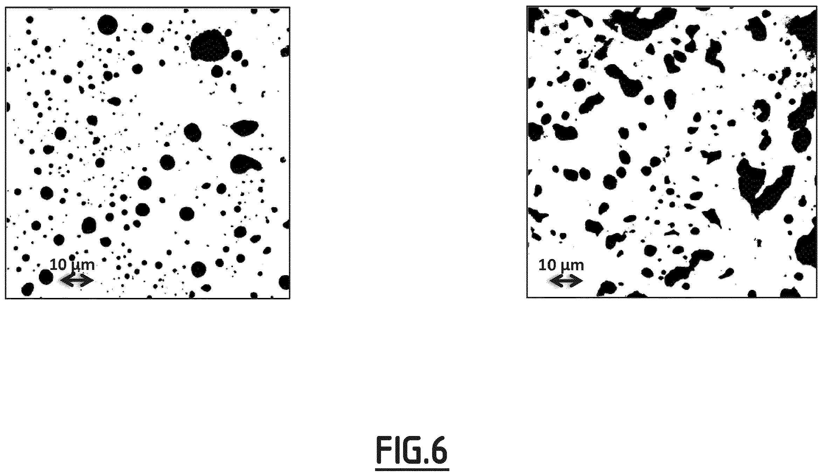

Figure 6 : Observations au microscope confocal à balayage laser (grossissement x63) d'un produit fromager du marché comprenant 17 % de matière grasse à l'achat (gauche) et 2 mois après affinage (droite).

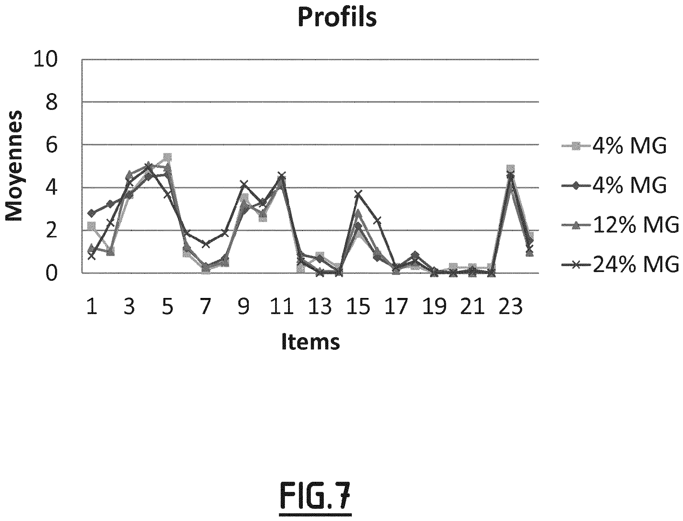

Figure 7 : Profils sensoriels obtenus sur 24 descripteurs par un jury expert.

### EXEMPLES

### Exemple 1 :

### Formulation comprenant 4 % de matière grasse animale en poids par rapport au poids total du produit fromager

**Tableau 2 : composition du mélange**

| Ingrédients | Pourcentage massique |
|---|---|
| MPC (à 1,5% de MG) | 30.6 |
| Poudre de lait écrémé (lactose) | 1.5 |
| Beurre | 4.3 |
| Eau | Q.S.P 100 % |
| Ferments | 0.9 |
| Présure | 0.4 |
| Sel | 0.6 |

### Protocole :

Dans un dispositif de mélange ou recombinaison, incorporer les ingrédients de la façon suivante : eau, beurre, MPC et lactose. Mélanger et chauffer à un cisaillement compris entre 20 000 et 25 000 s⁻¹ et à une température comprise entre 55 et 65°C pendant une durée minimale de 20 minutes de manière à obtenir un mélange homogène. Puis thermiser le mélange par chauffage et refroidissement. Injecter ensuite dans le mélange un agent coagulant et distribuer par dosage le mélange contenant l'agent coagulant dans des moules. La coagulation se fait entre 15 et 50°C, puis le produit fromager est refroidi et conditionné.

### Exemple 2 :

Formulation comprenant 0 % de matière grasse ajoutée

**Tableau 3 : composition du mélange**

| Ingrédients | Pourcentage massique |
|---|---|
| MPC | 30.9 |
| Poudre de lait écrémé (lactose) | 1.6 |
| Beurre | 0 |
| Eau | Q.S.P 100 % |
| Ferments | 0.9 |
| Présure | 0.4 |
| Sel | 0.6 |

### Protocole :

Dans un dispositif de mélange ou recombinaison incorporer les ingrédients de la façon suivante : eau, MPC et lactose. Mélanger et chauffer avec un cisaillement de 10 000 à 15 000 s⁻¹ et à une température comprise entre 60 et 70°C pendant une durée minimale de 20 minutes, de manière à obtenir un mélange homogène. Puis thermiser le mélange par chauffage et refroidissement. Injecter ensuite dans le mélange un agent coagulant et distribuer par dosage le mélange contenant l'agent coagulant dans des moules. La coagulation se fait entre 15 et 50°C, puis le produit fromager est refroidi et conditionné.

### Exemple 3 : imagerie confocale des produits fromagers obtenus

### 1. Protocole

Sur une lame plate, une fine tranche de l'échantillon est posée. Placer 4µL de marqueurs au coeur de l'échantillon et fixer l'ensemble avec une lamelle. Les marqueurs sont choisis en fonction de leur capacité à se fixer sur les sites particuliers d'une structure d'intérêt et diffuser dans la matrice ; en particulier, les marqueurs utilisés sont les suivants :
· Alexa Fluor 488 pour l'identification des protéines (vert)
· Bodipy 665 pour la caractérisation de la matière grasse (rouge)

L'échantillon après marquage pendant minimum 2 heures est placé sur un microscope confocal à balayage laser LSM700 Zeiss, équipé de l'objectif x63, et va être frappé par un rayon laser excitateur en réponse auquel il va émettre des rayons lumineux provenant de différents plans. Les rayons réfléchis sont filtrés par le microscope en fonction de leur longueur d'onde et détectés par des photomultiplicateurs.

Le choix des longueurs d'ondes des fluorochromes Alexa 488 et Bodipy 665 est effectué dans le but d'obtenir des pics bien distincts et séparés et en conséquence d'avoir une image plus propre.

Le traitement informatique est effectué à l'aide du logiciel ImageJ. ImageJ est un logiciel multiplateforme et open source de traitement et d'analyse d'images développé par les National Institutes of Health. En analyse d'image, ImageJ permet par exemple de dénombrer des particules, d'évaluer leurs ratios d'aspect, de mesurer diverses grandeurs (distances, surfaces), d'extraire des coordonnées de contours.

### 2. Résultats

Comme le montre la Figure 1, pour un produit fromager sans ajout de MG (0,5 % de MG en poids par rapport au poids total du produit fromager), le traitement d'image confocale avec le logiciel ImageJ montre un diamètre moyen des globules gras dans le produit fromager de 0,5 µm, inférieur à 1 µm.

Comme le montrent les Figures 2 à 5, la matière grasse (MG) du produit fromager obtenu par le procédé selon l'invention (HS) est sous forme globulaire et fine, distribuée de manière plus homogène que dans un produit du commerce de type pâte molle. Les globules gras sont recouverts avec une interface de matière protéique. Le diamètre moyen des globules gras dans le produit fromager est de 0,783 µm, inférieur à 1 µm. Le produit du commerce à 5 % de MG (Figure 2) ne présente pas la même structure que les produits fromagers obtenus par le procédé selon l'invention (HS), de même que les produits à 10,3 % de MG (Figure 3), 9 % de MG (Figure 4) ou 17 % de MG (Figure 5). La répartition de la MG n'est pas homogène.

### Exemple 4 : Mesures de granulométrie des produits fromagers obtenus

Par ailleurs, des mesures de granulométrie ont été effectuées sur les produits fromagers obtenus par le procédé selon l'invention (HS) à différents âges.

### 1. Protocole

### Cas d'un fromage

Un échantillon de 0.5 g de fromage est prélevé puis plongé dans 4.5 g de solution de dissociation (dilution à 10%) adaptée pour dissocier la matrice protéique et stabiliser les globules gras de l'échantillon, puis placé sous agitation pendant 2 heures minimum à 230rpm. Les produits sont laissés au repos pendant une nuit si besoin pour assurer une dissociation complète de la matrice et mis sous agitation 10 minutes avant l'analyse en granulométrie.

L'échantillon est ensuite placé dans la cellule de dispersion d'un granulomètre laser Malvern- Mastersizer 2000. Cet appareil mesure les distributions granulométriques des particules en mesurant la variation angulaire de l'intensité de lumière diffusée lorsqu'un faisceau laser traverse l'échantillon de particules dispersées. Les distributions granulométriques sont directement communiquées par le granulomètre.

### Cas d'un mélange liquide visqueux

Le même protocole est employé.

### 2. Résultats

Sur les données obtenues par mesures granulométriques, le d(0.5) indique que 50% du volume de la matière grasse est sous formes de gouttelettes dont le diamètre est inférieur à ce diamètre de particule exprimée en µm. MGLA signifie matière grasse laitière anhydre.

**Tableau 4 : Résultat des mesures granulométriques**

| Date d'analyse | Code produit | Produit | d(0.5) en µm |
|---|---|---|---|
| 23/05/2016 | 16-140 | 4% beurre | 0,664 |
| 19/05/2016 | 16-138 | 4% MGLA | 0,746 |
| 24/11/2016 | 16-140 | 4% beurre | 0,800 |
| 24/11/2016 | 16-138 | 4% MGLA | 0,709 |

Plus de 50% des particules ont un diamètre inférieur à 1 µm. Cela est également vrai après 6 mois de conservation. Les globules gras ne coalescent pas au cours de l'affinage, car ils sont très bien stabilisés par l'interface très riche en caséine.

Comme le montre la Figure 6, dans le produit du commerce à 17 % de matière grasse, beaucoup moins de globules gras sont intacts après deux mois d'affinage. La MG est sous forme coalescée.

### Exemple 5 : Tests sensoriels

Deux tests ont été conduits permettant de démontrer la proximité des qualités organoleptiques des produits fromagers obtenus par le procédé selon l'invention (HS) avec les qualités organoleptiques de fromages à pâte pressée allégés :
- Un premier test visant à évaluer avec un jury expert selon une liste de descripteurs, définie au préalable pour l'univers pâtes fermes, 4 produits à taux de matière grasse différents.
- Un deuxième test visant à classer différentes pâtes pressées par des sujets naïfs, dont des produits fromagers obtenus par le procédé selon l'invention (HS) selon une liste de descripteurs organoleptiques obtenue grâce à une première étape de tri libre.

### 1. Profil descriptif QDA par jury expert

Le jury expert répond à la norme française NF ISO 8586-1 et les locaux utilisés pour l'ensemble des évaluations à la norme NF EN ISO 8589.

Le profil descriptif QDA correspond à une qualification sur 24 descripteurs et à une quantification sur une échelle continue d'intensité de 0 à 10. Les descripteurs sont des descripteurs d'aspect, de texture en bouche, de saveurs et d'arômes.

Chaque produit est préalablement anonymé et portionné avant d'être présenté de manière monadique séquentielle, la température des produits lors de la dégustation étant de 14 - 15°C.

Des profils descriptifs QDA ont été effectués sur :
- des produits très allégés en matière grasse Healthy snack 4 % beurre (MG totale) à deux âges différents,
- des produits allégés de la même technologie à 12 % de MG,
- des produits non allégés ou « full fat » à 24 % de MG de la même technologie.

### Les profils obtenus sont représentés sur la Figure 7.

Les profils des produits à 4 et 12 % de matière grasse sont sensoriellement proches les uns des autres pour de nombreux descripteurs et ce, pour les 2 âges des produits très allégés.

Les produits très allégés à taux de MG inférieur ou égal à 5% peuvent être considérés comme équivalant à un produit allégé standard.

Le profil d'un produit full fat (24 %) se détache pour de nombreux descripteurs.

### 2. Test de classement

14 juges naïfs ont participé aux tests de classement. Chaque juge doit classer les 13 produits sur chaque descripteur donné, ces descripteurs ayant été définis après une première épreuve de tri libre. Ce sont les descripteurs les plus cités dans la phase du tri libre, et donc les plus à même de cribler les produits, qui ont été retenus.

Le classement se fait en fonction de l'intensité perçue pour chaque sensation. Les ex-aequo étaient autorisés.

Chaque produit a été préalablement anonymé et portionné. Les produits ont été présentés simultanément. La température des produits lors de la dégustation était de 14 - 15°C.

**Tableau 4 : Teneur en matière grasse des produits présentés au test de classement**

| | **Taux de MG (%)** |
|---|---|
| 1 | 0,5 *(par analyse)* |
| 2 | 0,5 *(par analyse)* |
| 3 | 4,5 *(par analyse)* |
| 4 | 4 *(par analyse)* |
| 5 | 4 *(par analyse)* |
| 6 | 12 *(par analyse)* |
| 7 | 11 *(indication pack)* |
| 8 | 17 *(indication pack)* |
| 9 | 14 *(indication pack)* |
| 10 | 16,5 *(indication pack)* |
| 11 | 24,5 *(indication pack)* |
| 12 | 23 *(indication pack)* |
| 13 | 29 *(indication pack)* |

Les produits très allégés en MG (MG inférieur ou égal à 5%) sont les produits numérotés 1 à 5, les autres sont des produits du commerce de type PPC (pâte pressée cuite) ou PPNC (pâte pressée non cuite) allégés (produits numérotés 6 à 10) ou non (produits numérotés 11 à 13).

Les produits ont été classés par les juges sur une échelle continue de 0 à 10 et la somme des rangs permet de les classer selon l'intensité perçue par les juges sur la liste de descripteurs.

Une analyse de la variance a été réalisée sur les rangs attribués par les juges, pour chaque descripteur. Il n'a pas été effectué de calcul de la moyenne des rangs. La significativité est placée à 5%. Les résultats de cette analyse de variance ont ensuite été soumis à un test de comparaison de moyenne (test de TUKEY).

Le tableau suivant reprend les résultats de ce test. Chaque valeur indiquée dans chaque case située à l'intersection d'une colonne « descripteur » et d'une ligne « échantillon » est constituée par la somme des rangs attribuées par les membres du jury audit échantillon, pour le descripteur considéré. Les lettres quant à elles indiquent l'appartenance de chaque échantillon, pour un descripteur considéré, à une « famille » à l'intérieur de laquelle les produits ne sont pas significativement différents vis-à-vis dudit descripteur ; deux échantillons présentant, pour un descripteur donné, une lettre commune sont ainsi considérés comme n'étant pas significativement différents.

**Tableau 5 : résultats du test de comparaison de moyenne (test de TUKEY)**

| Echantillon | ELASTIQUE | FONDANT | ACIDE | CREME | FROMAGER |
|---|---|---|---|---|---|
| 1 | **127 DE** | **113.5BCD** | **85 AB** | **55 AB** | 41.5 A |
| 2 | 144.5 E | **86.5 ABCD** | **67.5 A** | 47.5 A | **48 AB** |
| 3 | **121.5 CDE** | **105 BCD** | **70.5 A** | **87 BCDE** | **54.5 AB** |
| 4 | **113 BCDE** | **108 BCD** | **98 ABCD** | **76 ABCD** | **84.5 BC** |
| 5 | **129 DE** | **124 CD** | **79.5 AB** | **73.5 ABC** | **57 AB** |
| 6 | 79 AB | **110.5 BCD** | **75.5 AB** | **85.5 ABCDE** | **83 B** |
| 7 | 83.5 ABC | **94 ABCD** | 134.5 D | 114 DEF | **82.5 B** |
| 8 | 69.5 A | 62 A | 115 BCD | 103.5 CDEF | 154 D |
| 9 | **98 ABCD** | 57.5 A | **101 ABCD** | 101 CDEF | 148.5 D |
| 10 | **95.5 ABCD** | 85 ABC | 138 D | 116.5 EF | 124 CD |
| 11 | 81.5 ABC | **122 CD** | **93.5 ABC** | 129 D | 148.5 D |
| 12 | 67 A | **125.5 D** | 125.5 CD | 121.5 EF | **88 BC** |
| 13 | 65A | 80.5 AB | **90.5 ABC** | **73 ABC** | 160 D |

Dans la colonne « élastique » les produits appartenant à la famille « D », dans la colonne « fondant » les produits appartenant à la famille « D », dans la colonne « acide » les produits appartenant à la famille « A », dans la colonne « crème » les produits appartenant à la famille « B », et dans la colonne « fromager » les produits appartenant à la famille « B » apparaissent en gras.

Les inventeurs constatent que, hormis pour les descripteurs « élastique » et « fondant », il n'existe pas de famille propre aux produits très allégés. Toutefois, même pour ces descripteurs, les produits très allégés en MG sont le plus souvent également classés avec des produits à pâte ferme non allégés et des produits allégés en matière grasse. Les produits très allégés ne sont donc pas perçus significativement différents de produits allégés ou non-allégés.

Les produits très allégés sont classés comme étant les moins crème. Il existe un lien entre le taux de MG et la perception de la note crème. Ils ne sont toutefois pas significativement différents de produits allégés en MG.

Sur la base des descripteurs jugés comme pertinents ou centraux (car générés par le tri libre) pour décrire la gamme des fromages à pâtes pressées, il n'apparaît pas de différence significative ni systématique entre les produits light et extra light.

### 3. Comparaison avec d'autres univers produit -tests qualitatifs

Des comparaisons de profils entre des produits allégés en matière grasse et des produits non allégés (ou « full fat ») de produits du marché issus d'une même ou d'autres technologies ont été effectuées par un jury expert :
Les produits allégés en matière grasse sont décrits comme plus farineux, plus oxydés, amers, rances et présentant un goût de carton. Ces caractéristiques affectent les qualités organoleptiques du produit pour le consommateur.

Pour un produit ultra allégé comme Healthy Snack (taux de MG <5%), ces défauts organoleptiques n'ont pas été identifiés dans les profils sensoriels relativement aux produits plus riches en MG d'une même technologie : c'est un avantage notable de ce procédé.

## Revendications

1. Procédé de fabrication d'un produit fromager dont la teneur en matière grasse est inférieure ou égale à 5 % en poids par rapport au poids total du produit fromager, et ledit produit fromager ayant une humidité dans le produit fromager dégraissé (HFD) de 60 à 75 %, ledit procédé comprenant les étapes suivantes :
a) dans un dispositif de mélange ou recombinaison, mélanger et chauffer à une température de 40 à 70°C pendant au moins 10 minutes, avec un cisaillement de 5 000 à 40 000 s⁻¹, avantageusement 15 000 à 25 000 s⁻¹, un mélange comprenant de l'eau, et au moins une matière protéique en quantité suffisante pour que la teneur en protéines représente 10 à 35 % en poids par rapport au poids total du mélange, ladite matière protéique comprenant au moins une matière protéique d'origine laitière, le mélange comprenant au plus 5 % de matière grasse en poids par rapport au poids total du mélange, de manière à obtenir un mélange homogène ;
b) thermiser le mélange par chauffage, puis le refroidir ;
c) injecter dans le mélange au moins un agent coagulant ;
d) distribuer par dosage le mélange contenant l'agent coagulant dans des moules ;
e) coaguler entre 15 et 50°C ;
f) refroidir ; et
g) conditionner le produit fromager,
dans lequel ledit produit fromager est **caractérisé en ce que** le diamètre d'au moins 50% des globules gras dans le produit fromager est inférieur ou égal à 1,5 µm, de préférence inférieur à 1 µm, et **en ce que** le diamètre moyen des globules gras dans le produit fromager est inférieur ou égal à 1,5 µm, de préférence inférieur à 1 µm.

2. Procédé selon la revendication 1, **caractérisé en ce que** l'étape a) comprend l'ajout de matière grasse.

3. Procédé selon la revendication 1 ou 2, dans lequel l'étape a) de mélanger et chauffer est effectuée à une température de 60 à 70°C pendant au moins 10 minutes avec un cisaillement de 15 000 à 25 000 s⁻¹.

4. Procédé selon l'une quelconque des revendications 1 à 3, dans lequel ledit produit fromager a un extrait sec de 25 à 60 % en poids par rapport au poids total du produit fromager, de préférence de 45 à 60 % en poids par rapport au poids total du produit fromager.

5. Procédé selon l'une quelconque des revendications 2 à 4, dans lequel ladite matière grasse ajoutée est d'origine animale, d'origine végétale ou est un mélange de matières grasses d'origines animale et végétale.

6. Procédé selon l'une quelconque des revendications 1 à 5, **caractérisé en ce qu'**il ne comprend pas l'utilisation de sel(s) de fonte et de texturant(s).

7. Procédé selon l'une quelconque des revendications 1 à 6, dans lequel ladite au moins une matière protéique d'origine laitière est sélectionnée dans le groupe constitué de poudre de lait entier, de poudre de lait écrémé, de caséines, de caséinates, de concentrés protéiques laitiers, de concentrés de protéines sériques, de fromages frais ou affinés, de caillés, de yaourts, de laits fermentés, et d'un mélange de ces matières protéiques d'origine laitière.

8. Procédé selon l'une quelconque des revendications 1 à 7, dans lequel le mélange de l'étape a) comprend au plus 1 à 20 % de lactose, en poids par rapport au poids total du mélange.

9. Produit fromager susceptible d'être obtenu par un procédé selon les revendications 1 à 8, ayant une humidité dans le produit fromager dégraissé (HFD) de 60 à 75 %, et comprenant en poids par rapport au poids du produit fromager :
- 10 à 35 % de protéines ;
- au plus 5 % de matière grasse ; et
- eau en complément à 100%,
dans lequel ledit produit fromager est **caractérisé en ce que** le diamètre d'au moins 50% des globules gras dans le produit fromager est inférieur ou égal à 1,5 µm, et **en ce que** le diamètre moyen des globules gras dans le produit fromager est inférieur ou égal à 1,5 µm.

10. Produit fromager selon la revendication 9, **caractérisé en ce que** le diamètre d'au moins 50% des globules gras dans le produit fromager est inférieur ou égal à 1 µm, et **en ce que** le diamètre moyen des globules gras dans le produit fromager est inférieur ou égal à 1 µm.

11. Produit fromager selon l'une quelconque des revendications 9 à 10, comprenant en poids par rapport au poids du produit fromager:
- 10 à 35 % de protéines ;
- 0,15-2 % de matière grasse ; et
- eau en complément à 100%.

12. Produit fromager selon l'une quelconque des revendications 9 à 11, ledit produit fromager ayant un extrait sec de 25 à 60 % en poids par rapport au poids total du produit fromager, de préférence de 45 à 60 % en poids par rapport au poids total du produit fromager.

13. Produit fromager selon l'une quelconque des revendications 9 à 12, **caractérisé en ce que** ledit produit fromager comprend de 0,15 à 0,5 % de matière grasse et/ou de 0 % à 1% de glucides en poids par rapport au poids total du produit fromager.

14. Produit fromager selon l'une quelconque des revendications 9 à 13, **caractérisé en ce qu'**il ne comprend pas de sel(s) de fonte et de texturant(s).

## Patentansprüche

1. Verfahren zur Herstellung eines Käseprodukts mit einem Fettgehalt von unter oder gleich 5 Gew.-%, bezogen auf das Gesamtgewicht des Käseprodukts, und wobei das Käseprodukt eine Feuchtigkeit in dem entfetteten Käseprodukt (HFD) von 60 bis 75 % aufweist, wobei das Verfahren die folgenden Schritte umfasst:
a) in einer Misch- oder Rekombinationsvorrichtung, Mischen und Erhitzen auf eine Temperatur von 40 bis 70 °C für mindestens 10 Minuten mit einer Scherkraft von 5000 bis 40 000 s⁻¹, vorzugsweise 15 000 bis 25 000 s⁻¹, einer Mischung, die Wasser und mindestens ein Proteinmaterial in einer Menge enthält, die ausreicht, damit der Proteingehalt in der Mischung 10 bis 35 Gew.-%, bezogen auf das Gesamtgewicht der Mischung, beträgt, wobei das Proteinmaterial mindestens ein Proteinmaterial aus Milch umfasst, wobei die Mischung höchstens 5 Gew.-% Fett, bezogen auf das Gesamtgewicht der Mischung, umfasst, um eine homogene Mischung zu erhalten;
b) Thermisieren der Mischung durch Erhitzen und anschließend Abkühlen;
c) Injizieren von mindestens einem Gerinnungsmittel in die Mischung;
d) Verteilen der Mischung, die das Gerinnungsmittel enthält, durch Dosieren in Formen;
e) Gerinnen zwischen 15 und 50 °C;
f) Abkühlen; und
g) Verpacken des Käseprodukts,
wobei das Käseprodukt **dadurch gekennzeichnet ist, dass** der Durchmesser von mindestens 50 % der Fettkügelchen in dem Käseprodukt kleiner als oder gleich 1,5 µm, vorzugsweise kleiner als 1 µm ist, und dass der mittlere Durchmesser der Fettkügelchen in dem Käseprodukt kleiner als oder gleich 1,5 µm, vorzugsweise kleiner als 1 µm ist.

2. Verfahren nach Anspruch 1, **dadurch gekennzeichnet, dass** Schritt a) die Zugabe von Fett umfasst.

3. Verfahren nach Anspruch 1 oder 2, wobei Schritt a) des Mischens und Erhitzens bei einer Temperatur von 60 bis 70 °C für mindestens 10 Minuten mit einer Scherkraft von 15 000 bis 25 000 s⁻¹ durchgeführt wird.

4. Verfahren nach einem der Ansprüche 1 bis 3, wobei das Käseprodukt einen Trockenextrakt von 25 bis 60 Gew.-%, bezogen auf das Gesamtgewicht des Käseprodukts, vorzugsweise von 45 bis 60 Gew.-%, bezogen auf das Gesamtgewicht des Käseprodukts, aufweist.

5. Verfahren nach einem der Ansprüche 2 bis 4, wobei das zugegebene Fett tierischen Ursprungs, pflanzlichen Ursprungs oder eine Mischung aus tierischen und pflanzlichen Fetten ist.

6. Verfahren nach einem der Ansprüche 1 bis 5, **dadurch gekennzeichnet, dass** es keine Verwendung von Schmelzsalz(en) und Texturierungsmittel(n) umfasst.

7. Verfahren nach einem der Ansprüche 1 bis 6, wobei das mindestens eine Milchproteinmaterial aus der Gruppe ausgewählt ist, die aus Vollmilchpulver, Magermilchpulver, Kaseinen, Kaseinaten, Milchproteinkonzentraten, Serumproteinkonzentraten, frischen oder gereiften Käsen, Quark, Joghurt, fermentierter Milch und einer Mischung aus diesen Milchproteinmaterialien besteht.

8. Verfahren nach einem der Ansprüche 1 bis 7, wobei die Mischung aus Schritt a) höchstens 1 bis 20 Gew.-% Laktose, bezogen auf das Gesamtgewicht der Mischung, umfasst.

9. Käseprodukt, das durch ein Verfahren nach den Ansprüchen 1 bis 8 erhalten werden kann, mit einer Feuchtigkeit in dem entfetteten Käseprodukt (HFD) von 60 bis 75 %, und umfassend in Gewicht bezogen auf das Gewicht des Käseprodukts:
- 10 bis 35 % Protein;
- höchstens 5 % Fett; und
- Wasser als Ergänzung zu 100 %,
wobei das Käseprodukt **dadurch gekennzeichnet ist, dass** der Durchmesser von mindestens 50 % der Fettkügelchen in dem Käseprodukt kleiner als oder gleich 1,5 µm ist, und dass der mittlere Durchmesser der Fettkügelchen in dem Käseprodukt kleiner als oder gleich 1,5 µm ist.

10. Käseprodukt nach Anspruch 9, **dadurch gekennzeichnet, dass** der Durchmesser von mindestens 50 % der Fettkügelchen in dem Käseprodukt kleiner als oder gleich 1 µm ist und dass der mittlere Durchmesser der Fettkügelchen in dem Käseprodukt kleiner als oder gleich 1 µm ist.

11. Käseprodukt nach einem der Ansprüche 9 bis 10, umfassend in Gewicht, bezogen auf das Gewicht des Käseprodukts:
- 10 bis 35 % Protein;
- 0,15-2 % Fett; und
- Wasser als Ergänzung zu 100 %.

12. Käseprodukt nach einem der Ansprüche 9 bis 11, wobei das Käseprodukt einen Trockenextrakt von 25 bis 60 Gew.-%, bezogen auf das Gesamtgewicht des Käseprodukts, vorzugsweise von 45 bis 60 Gew.-%, bezogen auf das Gesamtgewicht des Käseprodukts, aufweist.

13. Käseprodukt nach einem der Ansprüche 9 bis 12, **dadurch gekennzeichnet, dass** das Käseprodukt 0,15 bis 0,5 Gew.-% Fett und/oder 0 bis 1 Gew.-% Kohlenhydrate, bezogen auf das Gesamtgewicht des Käseprodukts, umfasst.

14. Käseprodukt nach einem der Ansprüche 9 bis 13, **dadurch gekennzeichnet, dass** es kein(e) Schmelzsalz(e) und kein(e) Texturierungsmittel umfasst.

## Claims

1. Method for manufacturing a cheese product whose fat content is less than or equal to 5% by weight relative to the total weight of the cheese product, and said cheese product having a moisture in the fat-reduced cheese product (HFD) from 60 to 75%, said method comprising the following steps:
a) in a mixing or recombination device, mixing and heating at a temperature of 40 to 70°C for at least 10 minutes, with a shear of 5,000 to 40,000 s⁻¹, preferably 15,000 to 25,000 s⁻¹, a mixture comprising water, and at least one protein material in sufficient quantity so that the protein content represents 10 to 35% by weight relative to the total weight of the mixture, said protein material comprising at least one dairy-derived protein material, the mixture comprising at most 5% fat by weight relative to the total weight of the mixture, so as to obtain a homogeneous mixture;
b) thermizing the mixture by heating, then cooling it;
c) injecting into the mixture at least one coagulating agent;
d) dosing the mixture containing the coagulant into molds;
e) coagulating between 15 and 50°C;
f) cooling down; and
g) packaging the cheese product
wherein said cheese product is **characterized in that** the diameter of at least 50% of the fat globules in the cheese product is less than or equal to 1.5 µm, preferably less than 1 µm, and **in that** the average diameter of the fat globules in the cheese product is less than or equal to 1.5 µm, preferably less than 1 µm.

2. Method according to claim 1, **characterized in that** step a) comprises the addition of fat.

3. Method according to claim 1 or 2, wherein step a) of mixing and heating is performed at a temperature of 60 to 70°C for at least 10 minutes with a shear of 15,000 to 25,000 s⁻¹ .

4. Method according to any one of claims 1 to 3, wherein said cheese product has a solids content of 25 to 60% by weight relative to the total weight of the cheese product, preferably 45 to 60% by weight relative to the total weight of the cheese product.

5. Method according to any one of claims 2 to 4, wherein said added fat is of animal origin, of plant origin or is a mixture of animal and plant fats.

6. Method according to any one of claims 1 to 5, **characterized in that** it does not include the use of melting salt(s) and texturizing agent(s).

7. Method according to any one of claims 1 to 6 wherein said at least one dairy-derived protein material is selected from the group consisting of whole milk powder, skimmed milk powder, caseins, caseinates, milk protein concentrates, serum protein concentrates, fresh or refined cheeses, curds, yoghurts, fermented milks, and a mixture of these dairy-derived protein materials.

8. Method according to any one of claims 1 to 7, wherein the mixture of step a) comprises at most 1 to 20% lactose by weight relative to the total weight of the mixture.

9. Cheese product obtainable by a method according to claims 1 to 8, having a moisture in the fat-reduced cheese product (HFD) of 60 to 75%, and comprising by weight relative to the weight of the cheese product:
- 10 to 35% of proteins;
- not more than 5% fat; and
- supplemental water up to 100%
wherein said cheese product is **characterized in that** the diameter of at least 50% of the fat globules in the cheese product is less than or equal to 1.5 µm, and **in that** the average diameter of the fat globules in the cheese product is less than or equal to 1.5 µm.

10. Cheese product according to claim 9, **characterized in that** the diameter of at least 50% of the fat globules in the cheese product is less than or equal to 1 µm, and **in that** the average diameter of the fat globules in the cheese product is less than or equal to 1 µm.

11. Cheese product according to any one of claims 9 to 10, comprising by weight relative to the weight of the cheese product:
- 10 to 35% of proteins;
- 0.15-2% fat; and
- supplemental water up to 100%.

12. Cheese product according to any one of claims 9 to 11, said cheese product having a solids content of 25 to 60% by weight relative to the total weight of the cheese product, preferably 45 to 60% by weight relative to the total weight of the cheese product.

13. Cheese product according to any one of claims 9 to 12, **characterized in that** said cheese product comprises from 0.15 to 0.5% fat and/or from 0% to 1% by weight of carbohydrates relative to the total weight of the cheese product.

14. Cheese product according to any one of claims 9 to 13, **characterized in that** it does not include melting salt(s) and texturizing agent(s).
